# EUROPEAN PATENT APPLICATION

(11) **EP 1 727 081 A1**
(43) Date of publication of application: **29.11.2006**
(21) Application number: 04722053.8
(22) Date of filing: 19.03.2004
(51) Int. Cl.: G06Q 10/00

(54) **SYSTEM FOR ASSISTING TRADE OF DOMESTIC TREATED WATER, METHOD FOR ASSISTING TRADE OF DOMESTIC TREATED WATER, AND MEDIUM RECORDING THAT PROGRAM**

(71) Applicant: HITACHI, LTD., Chiyoda-ku Tokyo 100-8280 (JP)
(72) Inventor: SAHO, Norihide c/o HITACHI, LTD., Tokyo, 100-8220 (JP); ISOGAMI, Hisashi c/o HITACHI, LTD., Tokyo, 100-8220 (JP); IMAMURA, Yoichi c/o HITACHI, LTD., Tokyo, 100-8220 (JP); MOCHIZUKI, Akira c/o HITACHI, LTD., Tokyo, 100-8220 (JP)
(74) Representative: Hano, Christian
(86) International application number: PCT/JP2004/003754
(87) International publication number: WO 2005/091192

(57) **Abstract**

In supplying domestic treated water into which domestic wastewater is treated to demanders of the domestic treated water by transporting the domestic treated water as ballast water of a vessel, a match is made between information on domestic treated water to be supplied and information on demanded domestic treated water. The matching result is sent to ship owners of vessels that transport the domestic treated water. Each ship owner decides and offers a sale price and a transport water quantity to demanders. If a transaction is determined, the information on the domestic treated water to be supplied and the information on the demanded domestic treated water are corrected on the basis of the transport water quantity to make a match again. Thus embodied is a method of supporting a transaction of domestic treated water.

## Description

### Technical Field

The present invention relates to a domestic treated water transaction supporting system and method that make matching for a transaction of domestic treated water in supplying demanders with domestic treated water into which domestic wastewater is treated by transporting domestic treated water as ballast water of a vessel, and a recoding medium on which a program for the same is recorded.

### Background Art

Vessels such as crude oil tankers, natural gas carriers, ore carrying vessels keep their balance after discharging of cargo by storing ballast water in ballast tanks. Generally, seawater or freshwater in a discharging zone is used as ballast water. In a vessel moving to a next port for again loading with cargo, the ballast water stored in the ballast tank is discharged in the calling-in zone where shipment is made.

By the way, recently, discharging pollutants such as bacteria, plankton, etc. contained in the ballast water stored in vessels into the calling-in zone causes bacteria, plankton and so on which used not to exist in the water zone to proliferate seriously into red tide or causes plankton with shellfish poison to proliferate, which causes an international issue, i.e., destruction of the ecologic system of such water zones and fishery damages in aquafarming of fish and seashell.

To avoid this problem, "International Convention for the Control and Management of Ships' Ballast Water and Sediments, 2004" was adopted in IMO (International Marine Organization) on February 2004, and an obligation was decided to comply with a water quality criterion in discharging ballast water. In order to comply with the water quality criterion, such measures may be taken as to discharge ballast water after removing pollutant from ballast water by installing purifying facilities dedicated for ballast water in a vessel or as to store, from the beginning, ballast water which meets the water quality criterion.

However, considering an installation of purifying facilities dedicated for ballast water, installing purifying facilities dedicated for ballast water in vessels and having a performance meeting the water quality criterion provided in the above-mentioned convention will require a vast amount of initial cost and will require a considerable running cost. Additionally, in case of a tanker which carries crude oil between, for example, European countries and Arabian Gulf countries, there will be a problem that a relatively short distance of conveyance necessitates the purification of ballast water in shorter time, resulting in purifying equipment being large in scale for a higher processing capacity, which further increases the initial cost.

Also, considering storing ballast water which meets the water quality criterion to start off, there is a problem that the water quality criterion provided in the above-mentioned convention is much higher as compared with water qualities of typical oceans, rivers, lakes, etc., which necessitates the equipment with purifying treatment facilities for enhancing their water qualities, also increasing the initial cost and the running cost.

By the way, in Japan for example, domestic wastewater is treated through advanced treatment which uses, for example, the activated sludge method and released as advanced treatment water into rivers. The advanced treatment water sufficiently meets the water quality criterion of the above-mentioned convention. The advanced treatment water still contains nitrogen and phosphorus which can not be removed sufficiently by the advanced treatment and is a cause of contamination of oceans and rivers, such as red tide, but has a water quality suitable for bringing up plants, thus being under study of its effective utilization.

Further, many crude oil-producing countries, which lie in areas of an arid climate, have a problem of continuous lack of water resources, in which securing water resources used for agriculture and greening operation is a matter of importance.

Considering the above situations, domestic wastewater may be subjected to an advanced treatment or a high-class treatment to realize a higher water quality into domestic treated water, which may be stored as ballast water of a vessel such as a tanker and may be landed, for example, as agricultural water at an anchorage site where cargo is taken on board.

In order to construct such an arrangement, it is necessary to interconnect suppliers and demanders of domestic treated water and to decide a ship owner who carries ballast water.

However, considering the market for making a match among these parties, the possibility is high that the parties exist at places remote from one another, e.g., at separate countries, which causes a problem that doing businesses in the actual market is difficult. Further, there is a problem that conventional matching systems will not do because the quantity of domestic treated water a vessel can carry, the quantity of domestic treated water a demander wants and the quantity of domestic treated water a supplier supplies are not necessarily identical to among others.

Therefore, a problem to be solved by the present invention is to provide means for making a match for a transaction of domestic treated water in transporting, as ballast water, and providing domestic treated water.

### Disclosure of Invention

A domestic treated water transaction supporting system according to the present invention made to solve the above-mentioned problems comprises storing means for storing demand information and supply information of the domestic treated water, and matching information of the demand information and the supply information; matching means for making a match of each piece of the demand information with the supply information to find a matched piece of supply information that satisfies the demander's demand and outputting a matching result as matching information; register means for registering the demand information, the supply information and the matching information into the storing means; display creation means for creating display screens such as a matching information list screen on which a list of the matching information is displayed; and communication means for receiving the demand information and the supply information and sending the matching information list screen through the communication line.

Also, the demand information of the above-mentioned domestic treated water transaction supporting system includes information on water qualities, a demand quantity, a demand time of year and a purchase price of demanded domestic treated water; and the supply information includes information on water qualities, a supply quantity, a supply time of year and a supply price of the domestic treated water to be supplied. The domestic treated water transaction supporting system may be constructed to include correction means for registering, in a supply information database, a result of subtracting the quantity of water transported by a vessel (the transport water quantity) from a purchase water quantity in a piece of demand information for which a matching is done by matching means and a transaction has been determined and for registering, in the supply information database, a result of subtracting the transport water quantity from a supply water quantity in a piece of the supply information for which a transaction has been determined.

A domestic treated water transaction supporting method according to the present invention made to solve the above-mentioned problems comprises the steps of receiving supply information which includes information on water qualities, a supply quantity and a supply time of year of the domestic treated water which the supplier supplies from a supplier's terminal and registers the supply information in a supply information database; receiving demand information which includes information on water qualities, a demand quantity and a demand time of year of demanded domestic treated water from a demander's terminal and registering the demand information to a demand information database; matching each piece of the demand information for a matched piece of supply information that satisfies a condition of each parameter in the each piece of the demand information and registering a matching result to a matching information database; and creating and sending a matching information list screen on which a list of matching information is displayed to a ship owner's terminal.

The domestic treated water transaction supporting method may include the step of narrowing down the matching information by sending an image screen that enables a selection of matching information to demander's terminals before creating the matching information list screen.

The domestic treated water transaction supporting method may include the step of receiving, from the ship owner's terminal, selection information that indicates which piece of the matching information is selected in the matching information list screen and transport offer information which includes information on a transport water quantity of the domestic treated water a vessel can transport and a sale price obtained by adding a desired fee to a supply price; the step of creating and sending a transport offer information list screen on which a list of the transport offer information is compiled for each demander to relevant demander's terminals; and the step of receiving, from the demander's terminals, selection information that indicates which piece of the transport offer information is selected, registering on the basis of the selection information a result of subtracting the transport water quantity from a purchase water quantity in a piece of demand information for which a transaction has been determined into the supply information database, and registering, in the supply information database, a result of subtracting the transport water quantity from a supply water quantity in a piece of supply information that has been matched with the piece of demand information.

### Brief Description of Drawings

Fig.1 is a diagram illustrating a cycle of transaction of domestic treated water.
Fig. 2 is an overall constitutional diagram of a domestic treated water transaction supporting system.
Fig. 3 is an inner block constitutional diagram of a domestic treated water transaction supporting server.
Fig. 4 is a sequence diagram illustrating a procedure of transaction of domestic treated water.
Fig. 5 is an example of a screen for entering supply information.
Fig. 6(a) is an example of supply information registered in a supply information database,
Fig. 6(b) is an example of demand information registered in a demand information database,
Fig. 7 is an example of a screen for entering demand information.
Fig. 8 is a flowchart for describing a procedure of matching process.
Fig. 9 is an example of a screen for displaying a list of matching information.
Fig. 10 is an example of a screen for displaying transport offer information.
Fig. 11 is a sequence diagram illustrating a procedure of a transaction of domestic treated water.
Fig. 12 is an example of a screen for displaying a list of matching information.

### Best Mode for Carrying Out the Invention

Referring to suitable drawings, some modes of implementation of the invention will be described in the followings.

### (Premise)

First, a general picture of a transaction cycle of domestic treated water, in which a domestic treated water transaction supporting system according to the invention is applied, will be described using an example in which domestic treated water is used as ballast water of a tanker for carrying crude oil.

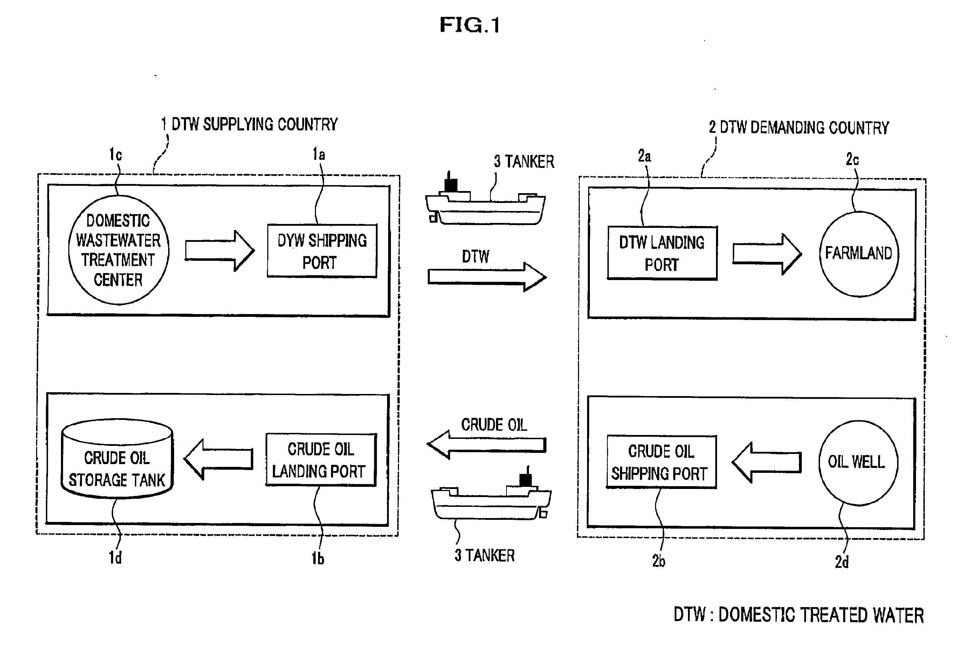

Fig.1 is a diagram illustrating a transaction cycle of domestic treated water. As shown in Fig. 1, a transaction cycle of domestic treated water is formed among a domestic treated water (DTW) supplying country 1 which produces domestic treated water into which domestic wastewater is treated, a domestic treated water (DTW) demanding country 2 which utilizes domestic treated water as agricultural water, and a tanker 3 which utilizes domestic treated water as ballast water.

Next, the process of a transaction cycle of domestic treated water will be described.

First, in the domestic treated water supplying country 1, domestic wastewater is subjected to an advanced treatment or high-class treatment at a domestic wastewater treatment center 1c to produce domestic treated water, which is transferred to a domestic treated water (DTW) shipping port 1a through a pipeline for example.

Then, at the domestic treated water shipping port 1a, domestic treated water is fully loaded as ballast water into the tanker 3. The tanker 3 in which domestic treated water is stored as ballast water in a ballast water tank different from a crude oil tank sails to a petroleum-producing and
domestic-treated-water-demanding country 2. Arriving in the domestic treated water demanding country 2, the tanker 3 discharges domestic treated water carried as ballast water at a domestic treated water (DTW) landing port 2a. The discharged domestic treated water is transported through pipelines to farm lands 2c to be utilized as agricultural water.

The tanker 3 which has discharged domestic treated water carried as ballast water at the domestic treated water landing port 2a fully stores seawater or freshwater in the water district and moves to a petroleum shipping port 2b within the same domestic treated water demanding country 2. Then, the tanker 3 discharges the ballast water at the petroleum shipping port 2b, takes in crude oil carried through a pipeline from an oil well 2d, and again sails for a domestic treated water supplying country 1. It is noted that the ballast water fully stored at the domestic treated water landing port 2a is permitted to be discharged without a clean-up treatment because the ballast water is discharged within the same country.

The tanker 3 loaded with crude oil at the petroleum shipping port 2b sails for a crude oil consuming and domestic-treated-water-supplying country 1, sails in a crude oil landing port 1b of the domestic treated water supplying country 1, and lands the crude oil transported as ship cargo. The crude oil landed at the crude oil landing port 1b is stockpiled in a crude oil storage tank 1d to be transferred for a subsequent process.

Then, the tanker 3 which landed a cargo of crude oil repeats a cycle of being fully loaded with seawater or freshwater in an adjacent water zone, moving to a domestic treated water shipping port 1a, and again taking in domestic treated water as ballast water.

Through the above-described processes, a transaction cycle of domestic treated water is carried out.

### First Exemplary Mode of Implementation

A first exemplary mode of implementation in which a domestic treated water transaction supporting method according to the present invention is applied to the above-described transaction cycle of domestic treated water will be detailed in the following.

In the present exemplary mode of implementation, it is assumed that the domestic treated water supplying country 1 that produces domestic treated water as shown in Fig. 1 is a supplier; the domestic treated water demanding country 2 which utilizes domestic treated water as agricultural water for example is a demander; and a company which owns a tanker 3 and manages its navigation is a ship owner. Though the present exemplary mode of implementation assumes the demander and the supplier of domestic treated water to be countries, the invention may be implemented by substituting local governments, local public organization, companies, etc. for the countries.

### (Domestic treated water transaction supporting System)

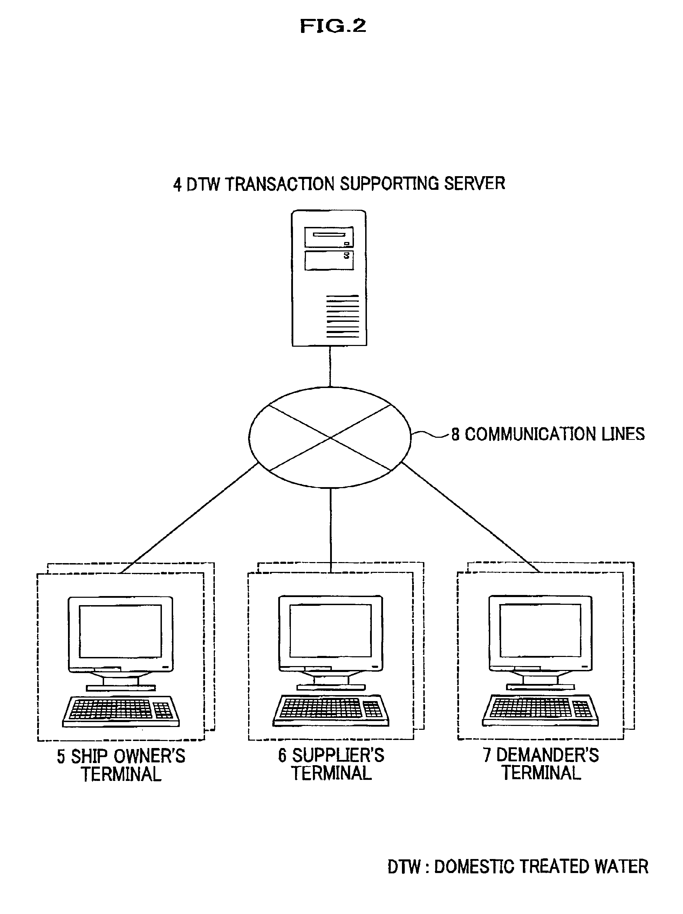

First, the structure of a domestic treated water transaction supporting system to which the domestic treated water transaction supporting method according to the present exemplary mode of implementation is applied will be described (referring to Fig. 1 if necessary). Here, Fig. 2 is a diagram showing a structure of a domestic treated water transaction supporting system according to the present exemplary mode of implementation. As shown in Fig. 2, the domestic treated water transaction supporting system has a structure in which a domestic treated water transaction supporting server 4 which makes a matching for a domestic treated water transaction (hereinafter, abbreviated to "supporting server 4"), a ship owner's terminal 5 or terminal device used by an owner of the tanker 3, a supplier's terminal 6 or terminal device used by a supplier of domestic treated water, and a demander's terminal 7 or terminal device used by a demander of domestic treated water are interconnected communicably via communication lines 8.

Next, each component of the domestic treated water transaction supporting system shown in Fig. 2 will be described in detail. The supporting server 4 executes such processes as receiving supply information transmitted from supplier's terminal 6 and concerning the supply of domestic treated water and demand information transmitted from demander's terminal 7 and concerning the demand of domestic treated water; making a matching of the supply information and the demand information; and transmitting the result of the matching to the ship owner's terminal 5.

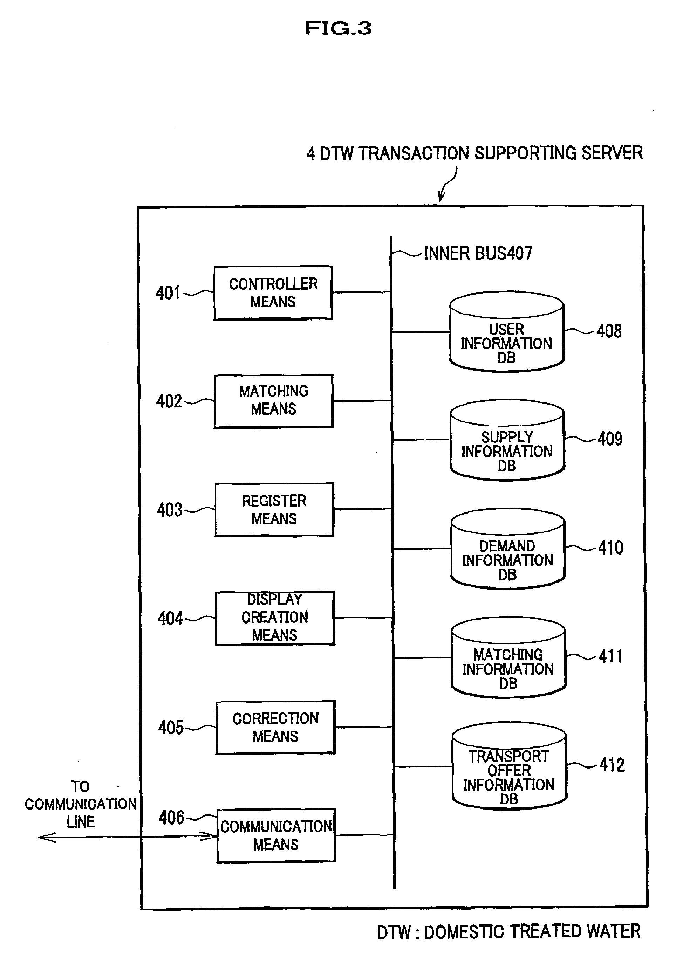

Here, Fig. 3 is an exemplary block constitutional diagram of the supporting server 4. As shown in Fig. 3, the supporting server 4 comprises controller means 401 for overall controlling the supporting server 4; matching means 402 for executing a matching process between the demand information and the supply information of domestic treated water; register means 403 for registering information transmitted from each terminal to a corresponding database (DB); display creation means 404 for creating and outputting, for example, screen images for entering various information to be transmitted to each terminal as a file in the HTML (Hyper Text Markup Language) format for example; correction means 405 for correcting the demand information and the supply information on which a matching is made; and communication means 406 which is an interface for communicating with each terminal through communication lines 8.

The supporting server 4 further comprises user information DB 408 in which there is registered user information, i.e., information on a ship owner, suppliers and demanders involved in the domestic treated water transaction supporting system; supply information DB 409 in which there is registered supply information of domestic treated water transmitted from the supplier's terminal 6 by a supplier; demand information DB 410 in which there is registered demand information of domestic treated water transmitted from the demander's terminal 7 by a demander; matching information DB 411 in which there is registered matching information, i.e., the result of a matching process by the matching means 402; and transport offer information DB 412 in which there is registered transport offer information (detailed later) for the matching information. The above-mentioned means and DBs are interconnected by an inner bus 407.

Also, the supporting server 4 is realized by a server computer comprising a CPU (central processing unit), a RAM (random access memory), a hard disc drive, a network card, etc. and the above-mentioned control means 401, matching means 402, register means 403, display creation means 404 and correction means 405 are realized by invoking, on the RAM, a program registered in the hard disc drive and the CPU executing the program. Also, the communication means 406 corresponds to the network card. Further, the user information DB 408, supply information DB 409, demand information DB 410, matching information DB 411 and transport offer information DB 412 are realized by assigning segmented areas on the hard disc.

Next, ship owner's terminals 5, supplier's terminals 6 and demander's terminals 7 are terminal devices which are bi-directionally communicable with the supporting server 4 and are realized by, for example, personal computers having a WWW (World Wide Web) browser which enables browsing of files in the HTML format and a network card.

Further, for communication lines 8 interconnecting components of the domestic treated water transaction supporting system, there may be used the Internet for example or, taking the security into account, there may be used a VPN (Virtual Private Network) or any network based on dedicated lines. It should be noted that if the Internet is used for the communication lines 8, secure communications are preferably practiced by using any well-known encryption technique.

### (Transaction Procedure of Domestic Treated Water)

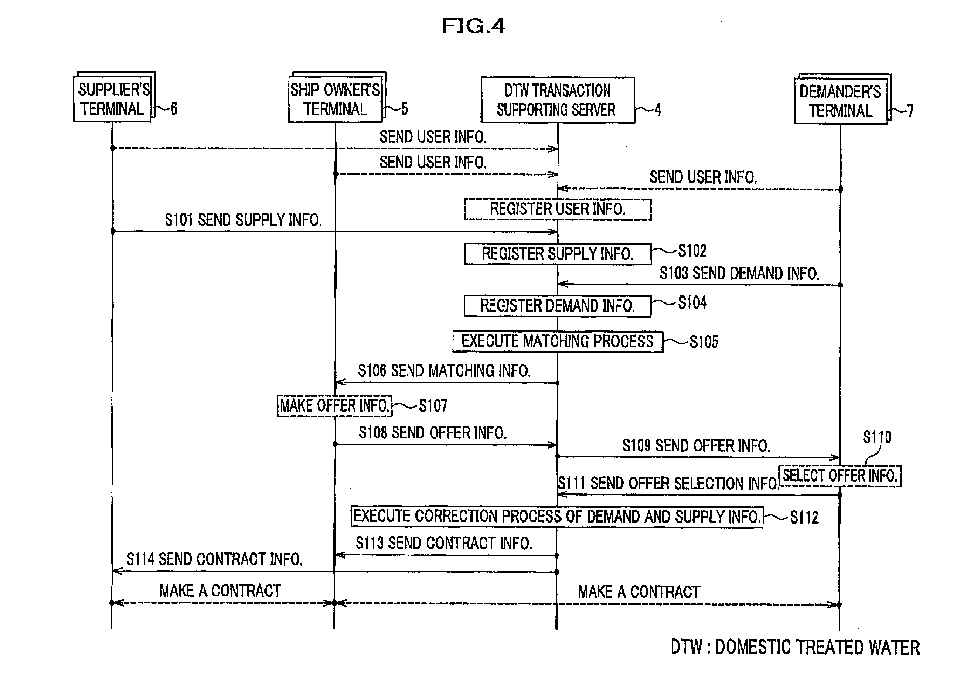

Then, referring to a sequence diagram shown in Fig. 4 (and to Figs. 2 and 3 if necessary), there will be described a procedure in which the domestic treated water transaction supporting method according to the present mode of implementation is carried out using the above-described domestic treated water transaction supporting system. It is noted that in Fig. 4, portions shown in broken lines show what is done by a person's action.

### (Information Registration)

A demander, a supplier and a ship owner who are to use the domestic treated water transaction supporting system first make an application for use of the domestic treated water transaction supporting system by sending user information to the administrator of the supporting server 4, e.g., submitting an application form filled with predetermined items. In this case, the administrator of the supporting server 4 examines each applicant, and, if no problems are found, registers information on the demander, supplier and ship owner as user information into the user information DB 408 of the supporting server 4. At this point, exemplary pieces of user information registered in the user information DB 408 are shown in the following Table 1.

**Table 1.**

| Exemplary Pieces of User Information Registered in User Information DB | | | | | | |
|---|---|---|---|---|---|---|
| User ID | User Password | User Name | Location | Phone Number | Facsimile Number | Person in Charge |
| A001 | 11111111 | A Inc. | 1-2-3·· | 81-03·· | 81-03·· | ○○ ○ |
| A002 | 22222222 | B Co., Ltd. | 2-3-4·· | 965-3·· | 965-3·· | □□ □ |
| A003 | 33333333 | C Inc. | 4-5-6·· | 81-06·· | 81-06·· | ΔΔ Δ |
| A004 | 44444444 | D Co., Ltd. | 6-7-8·· | 971-0·· | 971-0 | •• • |
| : | : | : | : | : | : | : |

As shown in Table 1, "User Name", "Location", "Phone Number", "Facsimile Number" and "Person in Charge" of each user are registered as user information, being related to "User ID" which is uniquely assigned to each user. In each piece of user information, there is set an arbitrary "User Password", which is used with the user ID for authentication to log in the domestic treated water transaction supporting system before a demander, a supplier or a ship owner who desires to use the domestic treated water transaction supporting system accesses the domestic treated water transaction supporting system.

It is noted that though a user registration to the domestic treated water transaction supporting system is assumed to be achieved by sending an application form, it is, off course, also possible to electronically apply for a user registration by transmitting user information from each terminal via communication lines 8.

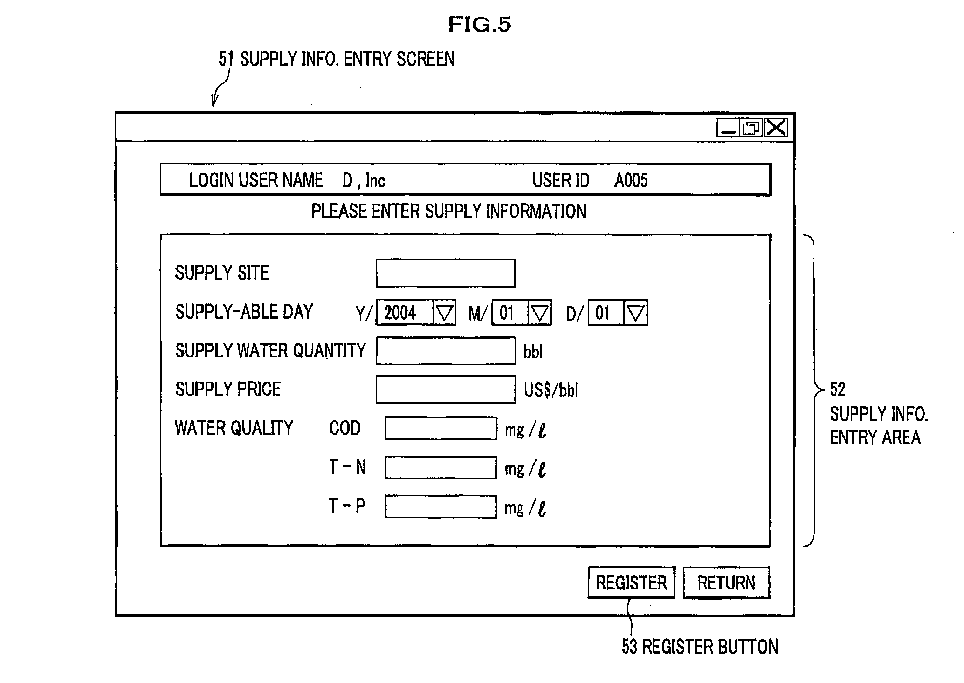

Completing the user registration of a demander, a supplier or a ship owner, the supplier sends supply information of domestic treated water from the supplier's terminal 6 (in step S101), and the supporting server 4 that has received the supply information registers the supply information in the supply information DB 409 with register means 403 (in step S102). Here, an example of a supply information entry screen displayed on the supplier's terminal 6 when the supplier enters the supply information is shown in Fig. 5. The supply information entry screen 51 shown in Fig. 5 is a one that has been created by display creation means 404 and has been transmitted to the supplier's terminal 6 via communication lines 8. The supply information entry screen 51 is arranged to include supply information entry fields 52 for entering "Supply Site", "Supply-able Day (or possible supply day)", "Supply Water Quantity" and "Supply Price" of domestic treated water the supplier supplies, and information on water qualities: i.e., "COD (Chemical Oxygen Demand)", "Total Nitrogen (T-N)", and "Total Phosphorus (T-P)", and a register button 53 to be clicked to determine the information entered in the supply information entry fields 52. The supplier can enter information of domestic treated water he or she supplies in the supply information entry fields 52 and click the register button 53 to send the supply information to the supporting server 4.

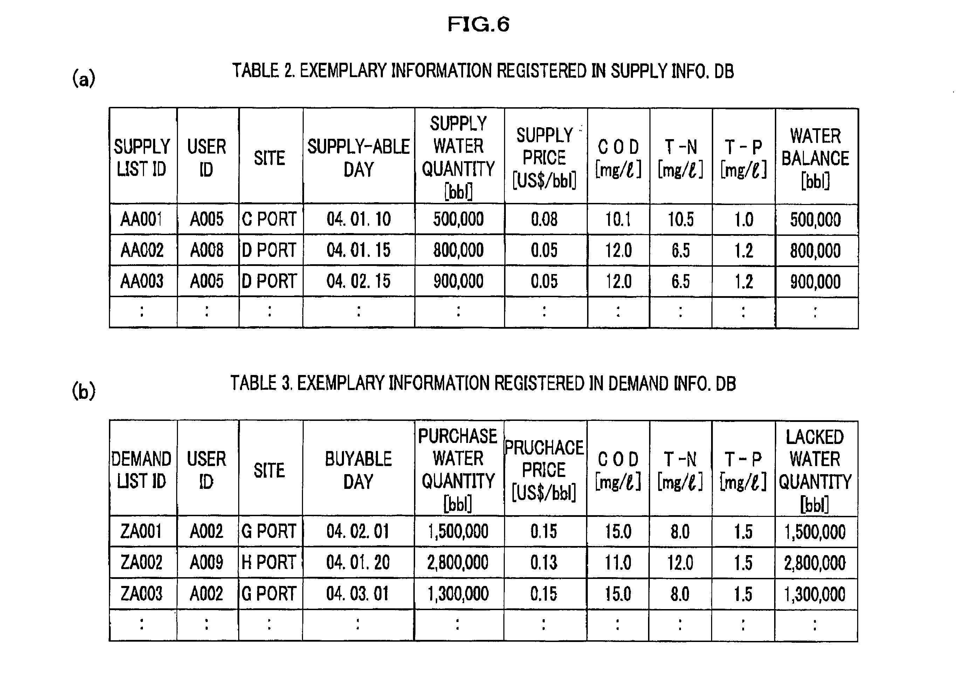

At this point, shown in Fig. 6(a) are exemplary pieces of supply information registered in the supply information DB 409 of the supporting server 4. As shown in Fig. 6(a), in a piece of supply information entered using the above-mentioned supply information entry screen 51, there are registered "User ID" included in the user information of the supplier who have sent the supply information and parameters entered in the supply information entry fields 52 of the supply information entry screen 51, associated with "supply list ID" uniquely assigned to each piece of supply information.

Each piece of supply information is further provided with an item for "Water Balance", i.e., "supply water quantity" minus the amount of domestic treated water which has been subjected to a matching in the matching process detailed later and has been decided to be transported by the tanker 3. In the exemplary pieces of supply information shown in Fig. 6(a), as it is just after registration, items of "supply water quantity" and "water balance" are set identical to each other. Note that in Fig. 6(a), 1 bbl (barrel) is about 158.9 liter.

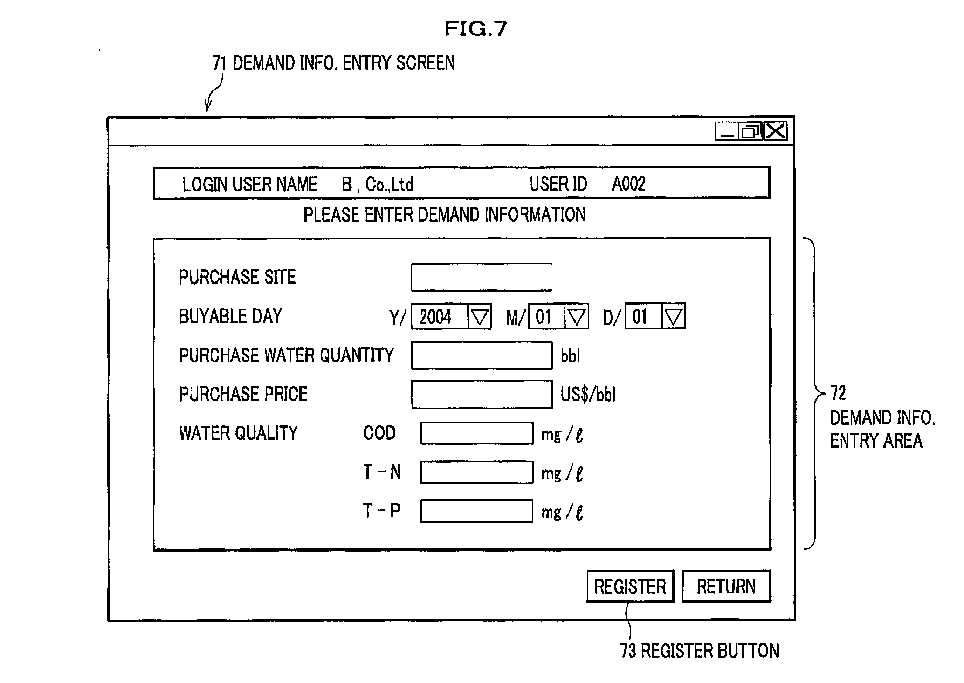

Then, the demander sends demand information of domestic treated water from the demander's terminal 7 (in step S103), and the supporting server 4 that has received the demand information registers the demand information in the demand information DB 410 with register means 403 (in step S104). Here, an example of a demand information entry screen displayed on the demander's terminal 7 when the demander enters the demand information is shown in Fig. 7. The demand information entry screen 71 shown in Fig. 5 is a one that has been created by display creation means 404 of the supporting server 4 and has been transmitted to the demander's terminal 7 via communication lines 8. The demand information entry screen 71 is arranged to include demand information entry fields 72 for entering "Purchase Site", "Buyable Day (or possible purchase day)", "Purchase Water Quantity" and "Purchase Price" of demanded domestic treated water, and information on water qualities: i.e., "COD (Chemical Oxygen Demand)", "Total Nitrogen (T-N)", and "Total Phosphorus (T-P)", and a register button 73 to be clicked to determine the information entered in the demand information entry fields 72. The demander can enter information of domestic treated water he or she desires to purchase and click the register button 73 displayed in the lower part of the screen to send the demand information to the supporting server 4.

At this point, shown in Fig. 6(b) are exemplary pieces of demand information registered in the demand information DB 410 of the supporting server 4. As shown in Fig. 6(b), in a piece of demand information entered using the above-mentioned demand information entry screen 71, there are registered "User ID" included in the user information of the demander who has sent the demand information and parameters entered in the demand information entry fields 72 of the demand information entry screen 71, associated with "demand list ID" uniquely assigned to each piece of demand information.

Each piece of demand information is further provided with an item for "Lacked Water Quantity", i.e., "Purchase Water Quantity" minus the amount of domestic treated water which has been subjected to a matching in the matching process detailed later and has been decided to be transported by the tanker 3. In the exemplary pieces of demand information shown in Fig. 6(b), as it is just after registration, items of "purchase water quantity" and "lacked water quantity" are set identical to each other.

It is noted that though in the present exemplary mode of implementation, the process of registering the demand information and the supply information is first described for the sake of the description, the process of registering the demand information and the supply information may be carried out any times in any timing.

Also, the demand information and/or the supply information may include information on the number of remaining germs (e.g., cholera bacillus, colon bacillus, enterococci, etc.).

### (Matching Process)

In the next place, the supporting server 4 performs a matching process of the supply and demand information collected and registered in the above-described procedure with the matching means 402 (in step S105).

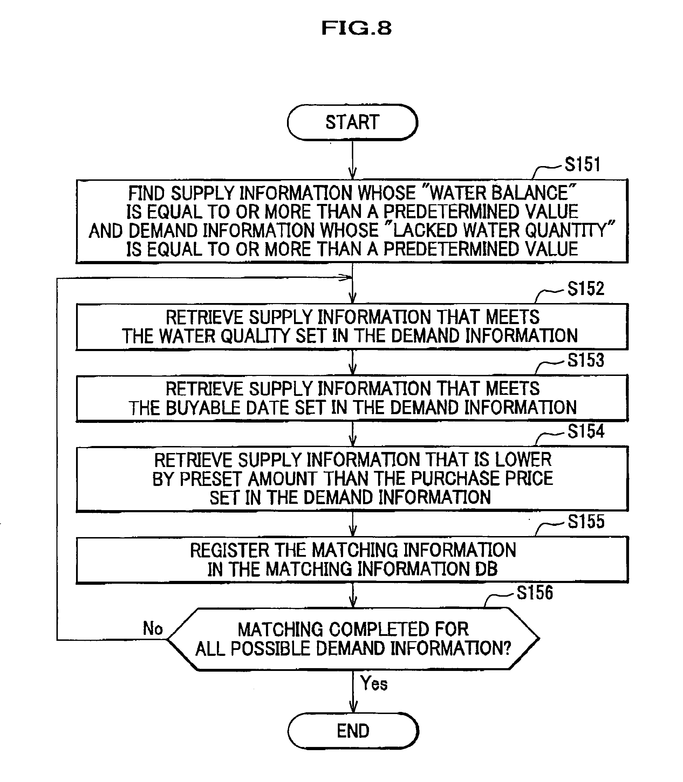

Fig. 8 is a flowchart for describing a procedure of the matching process in the supporting server 4. The procedure of the matching process will be detailed referring to the flowchart shown in Fig. 8. In this matching process, the demand information is searched for each of the pieces of demand information registered in the demand information DB 410. The reason why the demand information is given priority in the matching process in this way is that it does not matter for domestic treated water to become surplus because suppliers can discharge the surplus domestic treated water into rivers, seashores, etc., whereas it matters seriously for any shortage to occur in the purchase water quantity of domestic treated water because demanders use domestic treated water as agricultural water.

The matching means 402 first searches the supply information DB 409 for a piece of supply information in which the "water balance" is equal to or more than a predetermined value and the demand information DB 410 for a piece of demand information in which the "lacked water quantity" is equal to or more than a predetermined value to make the found pieces the matching candidates (in step S151). The predetermined value is a value which is determined by the administrator of the supporting server 4 and which is equal to or more than 0 bbl.

Then, the matching means 402 searches the narrowed-down or found pieces of supply information for pieces of supply information that meet the conditions of parameters (COD, T-N, T-P) concerning the water qualities in a to-be-matched piece of the demand information (in step S152). In this case, the range is narrowed down, as the matching candidates, to the pieces of supply information that have values less than the values of the parameters concerning the water qualities in the to-be-matched piece of demand information.

Then, the matching means 402 further searches the supply information narrowed-down in step S152 for pieces of supply information that meet the condition of the "buyable day" of the to-be-matched piece of demand information (in step S153). Here, in the matching means 402, there is installed a function for calculating the number of transport days necessary for transporting domestic treated water from information on the "purchase site" of the to-be-matched piece of demand information and information on the "supply site" of the supply information, and matching the to-be-matched piece of demand information with pieces of supply information in which the difference between the "supply-able day" and the "buyable day" is within a predetermined number of days centering the calculated number of transport days.

Assuming that the "buyable day" is July 30 for example and the "supply-able day" is May 30 for example, then the number of transport days is calculated from the "purchase site" of the demand information and the "supply site" of the supply information and it is determined that the matching is possible if the number of transport days is within a range of 31 days plus or minus one week for example. The width which is added to and subtracted from the number of transport days may be arbitrarily set by the administrator of the supporting server 4.

Then, the pieces of supply information narrowed down in step S153 is searched comparing the "purchase price" of demand information and the "supply price" of supply information to find pieces of supply information that have "supply prices" lower than the "purchase price" by a predetermined amount of money (in step S154). It is noted that the predetermined amount of money may be arbitrarily set by the administrator of the supporting server 4, and may be set even for a negative value in such a case where a ship owner has a subsidy granted, for example, by a local public organization for transporting domestic treated water.

The search result in step S154 is final matching information, which is registered in the matching information DB 411 by the register means 403 (in step S155).

Then, it is determined whether the matching process has exhausted the possible pieces of demand information (in step S156), and steps S152 through S155 are repeated to output matching information till the matching is completed for all of the possible pieces of demand information.

In the matching procedure shown in Fig. 8, steps S152 through S154 may be executed exchanging the orders thereof. Also, if the number of parameters to be subjected to the matching process has increased in the demand information and the supply information, steps in the searching process may be added accordingly.

In Table 2, there are shown some exemplary pieces of matching information registered in the matching information DB 411.

**Table 2**

| Exemplary Matching Information Registered in Matching Information DB | | |
|---|---|---|
| Matching List ID | Demand List ID | Supply List ID |
| CBB001 | ZA001 | AA003 |
| CBB002 | ZA001 | AA005 |
| CBB003 | ZA005 | AA008 |
| : | :l | : |

In each piece of matching information shown in Table 2, "Demand List ID" of the matched piece of demand information and "Supply List ID" of the matched piece of supply information are registered associated with "Matching List ID" uniquely assigned to the piece of matching information.

It is noted that in order to stabilize the procurement of domestic treated water by demanders, it is possible to provide the matching means 402 with a matching condition modifying arrangement such as a mechanism in which if there is no piece of supply information that establishes a matching with the demand information, the "purchase prices" of the demand information are automatically set higher as the "buyable day" of domestic treated water is coming closer. This makes it possible to raise the possibility that a matching is realized.

### (Transmission of Transport Offer Information)

The matching information created by the matching process of step S105 and registered in the matching information DB 411 is transmitted by the display creation means 404 of the supporting server 4 to the ship owner's terminal 5 in a display image format in which there is displayed a list of demand information and supply information corresponding to the matching information (in step S106).

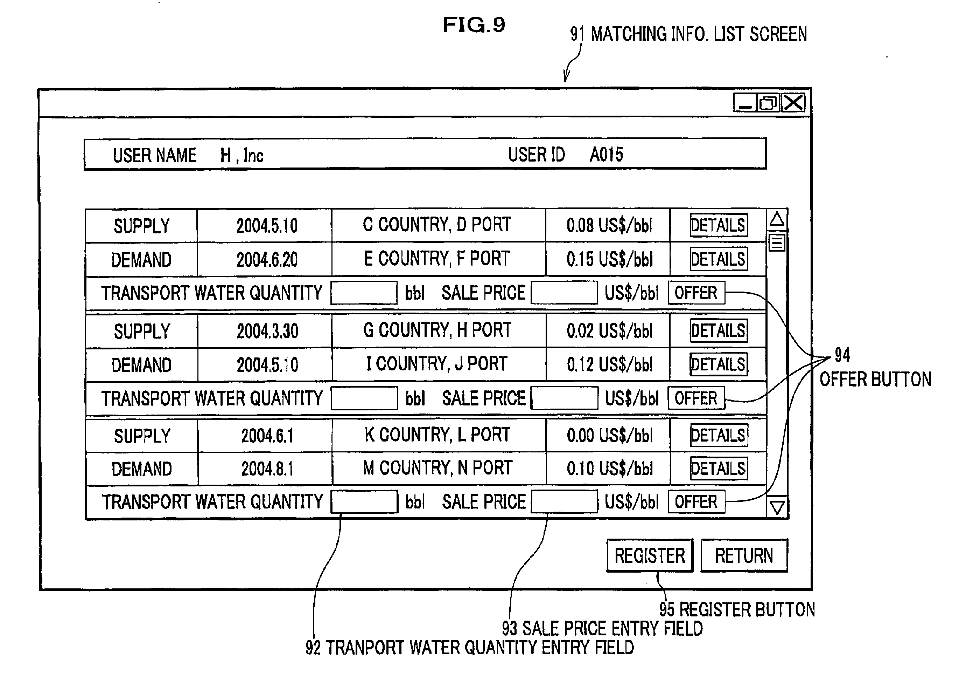

In Fig. 9, there is shown an example of matching information list screen or display image on which there is displayed a list of demand information and supply information corresponding to the matching information. In the matching information list screen 91 shown in Fig. 9, there are displayed the details of demand information and supply information corresponding to each piece of matching information and, at the bottom thereof, there are included a transport water quantity entry field 92 for entering the quantity of water the tanker 3 can transport in case when the ship owner undertakes the transport of domestic treated water, a sale price entry field 93 for entering a desired sale price in case when domestic treated water is transferred to a demander, an offer button 94 for determining the entry after an entry into each entry field, and a register button 95 to be clicked for transmitting the entered information to the supporting server 4.

A ship owner looks over the matching information list screen 91 to see if there is any that satisfies all the conditions enabling a transport of domestic treated water and, if so, enters the transport water quantity of ballast water (i.e., domestic treated water) which can be transported by his or her own tanker 3 in the transport water quantity entry field 92, sets the sale price lower than the purchase price of the demander by adding his or her own commission to the supply price by the supplier, enters the sale price in the sale price entry field 93, and clicks the offer button 94. Repeating this process, pieces of transport offer information to be offered to demanders are created (in step S107).

Entering each piece of transport offer information until all of the desired pieces are exhausted, the ship owner clicks the register button 95. This causes the entered transport offer information to be transmitted to the supporting server 4 (in step S108), which, in turn, causes the register means 403 to register the received transport offer information in the transport offer information DB 412 and the display creation means 404 to create a transport offer screen on which a list of transport offer information for each demander is displayed, and transmits the transport offer information in the form of the transport offer screen to the demander's terminals 7 of relevant demanders (in step S109). Here, the following table 3 shows exemplary pieces of transport offer information registered in the transport offer information DB 412.

**Table 3**

| Exemplary Transport Offer Information Registered in Transport Offer Information DB | | | | | |
|---|---|---|---|---|---|
| Transport Offer List ID | Matching List ID | Ship-owner's User ID | Sale price [bbl/US$] | Transport Water Quantity [bbl] | Request Completion Flag |
| ZAA001 | CBB003 | A007 | 0.11 | 300,000 | null |
| ZAA002 | CBB003 | A001 | 0.13 | 200, 000 | null |
| ZAA003 | CBB005 | A003 | 0. 09 | 150, 000 | null |
| : | : | : | : | : | : |

In each piece of transport offer information shown in Table 3, there are registered "Matching List ID" which indicates for which piece of matching information the piece of transport offer information is intended, "Ship-owner's User ID" or a user ID of the ship owner who transmitted the piece of transport offer information, "Transport Water Quantity" which can be transported by tanker 3, and "Request Completion Flag" to be set when a demander has made a request with respect to the piece of transport offer information, associated with "Transport Offer List ID" uniquely assigned to the piece of transport offer information.

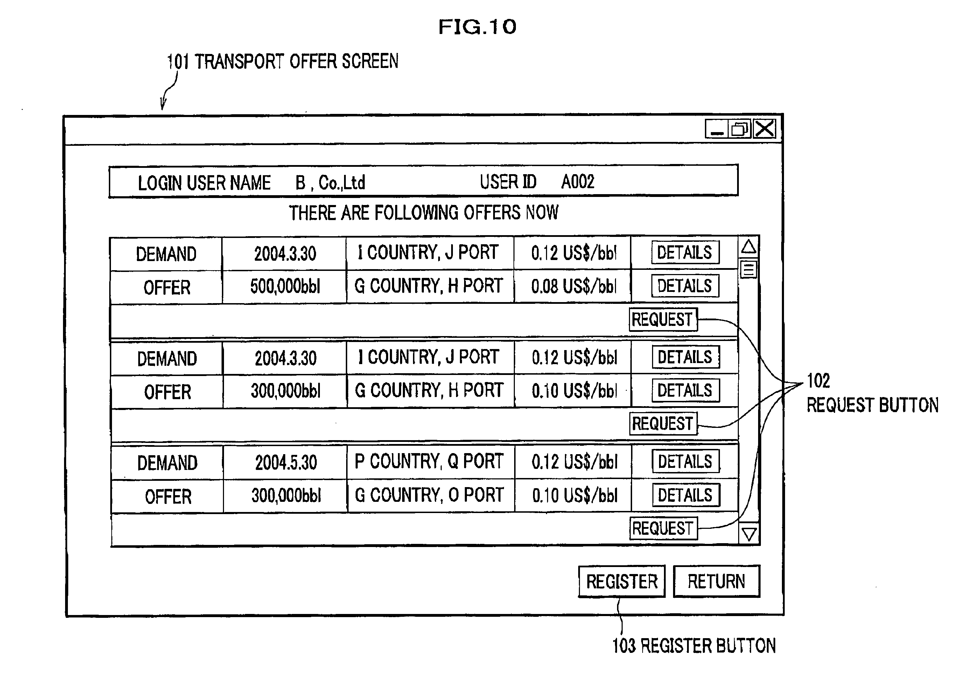

Then, the demander's terminal 7 which has received the transport offer screen created by the display creation means 404 of the supporting server 4 displays the transport offer screen. Here, Fig. 10 shows an example of the transport offer screen 101 displayed by the demander's terminal 7. The transport offer screen 101 shown in Fig. 10 is arranged to include, for each demander, a list of transport offer information offered by ship owners, a request button 102 to be clicked to request the transport under the offered conditions and a register button 103 to be click to transmit the entered information to the supporting server 4.

The demander looks over the transport offer screen 101 to check the transport water quantity and the sale price and, if he or she accepts the transport water quantity and the sale price, clicks the request button 102 on the transport offer screen 101. In this case, if a plurality of ship owners enter respective pieces of transport offer information, two pieces of transport offer information will be displayed for an identical piece of matching information, which enables the demander to select a desired one of plural pieces of transport offer information considering the transport water quantities and the sale prices.

The demander selects a piece of transport offer information from the transport offer screen 101 by clicking the request button 102 of a piece of transport offer information for a transport he or she desires to request (in step S110), and clicks the register button 103. Clicking the register button 103 causes information to the effect that the piece of transport offer information is selected to be transmitted to the supporting server 4 as transport offer selection information (in step S111).

### (Correction of Demand Information and Supply Information)

In response to receiving the transport offer selection information, the supporting server 4 rewrites the request completion flag of the relevant piece of transport offer information registered in the transport offer information DB 412 (refer to Table 3) from "null" to "1". The supporting server 4 causes the correction means 405 to perform a correction process on the item "water balance" of the supply information shown in Fig. 6(a) and a correction process on the item "lacked water quantity" of the demand information shown in Fig. 6(b) on the basis of the transport offer selection information (in step S112).

The correction of supply information and demand information will be described in detail. First, on the basis of the "matching list ID" of a piece of transport offer information whose request completion flag is "1", the correction means 405 of the supporting server 4 retrieves a piece of matching information associated with the piece of transport offer information from the matching information DB 411. On the basis of the retrieved piece of matching information, the correction means 405 retrieves a relevant piece of supply information registered in the supply information DB 409 and a relevant piece of demand information registered in the demand information DB 410.

Then, subtracting the "transport water quantity" of the transport offer information from the "water balance" of the retrieved piece of supply information, the result is registered as a new "water balance". Then, subtracting the "transport water quantity" of the transport offer information from the "lacked water quantity" of the retrieved piece of demand information, the result is registered as a new "lacked water quantity".

This causes the water quantity of the transported domestic treated water to be reflected in the relevant demand and supply information and to be used for determination of whether it is a matching candidate or not in a matching process (in step S151 of Fig. 8). It is noted that even if the present time and date has passed the "supply-able day" of any piece of supply information or the "buyable day" of any piece of demand information, it is also possible to rewrite the "water balance" the expired piece of supply information or the "lacked water quantity" of the expired piece of demand information to "0 bbl" to exclude the expired information from the matching process objects.

### (Contract)

Completing the performance of correction process for the demand information and the supply information (in step S112), the supporting server 4 transmits the transport offer selection information received in step S111 to a relevant ship owner (in step S113), and also transmits the transport offer selection information to the supplier's terminal 6 of a matched supplier (in step S114).

Subsequently, a procedure of steps S101 through S114 is repeated.

Through the above-described processes, a match is made among suppliers and demanders of domestic treated water and ship owners who transport domestic treated water, a supplier makes a contract with a ship owner to sell domestic treated water, and a demander makes a contract with the ship owner to buy domestic treated water from him or her. Then, as shown in Fig. 1, the contract is implemented by a tanker 3 of the ship owner transporting domestic treated water as ballast water from the domestic treated water shipping port 1a to the domestic treated water landing port 2a.

### Second Exemplary Mode of Implementation

The second exemplary mode of implementation of the present invention will be described in the following. A domestic treated water transaction supporting method according to the second exemplary mode of implementation is a one applied to a cycle of transaction of domestic treated water shown in Fig. 1 as in case of the first exemplary mode of implementation. Further, the structures of a domestic treated water transaction supporting system and a domestic treated water transaction supporting server according to the present mode of implementation are the same as those shown in Figs. 2 and 3 in connection with the first exemplary mode of implementation and accordingly the detailed description thereof is omitted, using the same reference numerals as in case of the first exemplary mode of implementation.

### (Transaction Procedure of Domestic Treated Water)

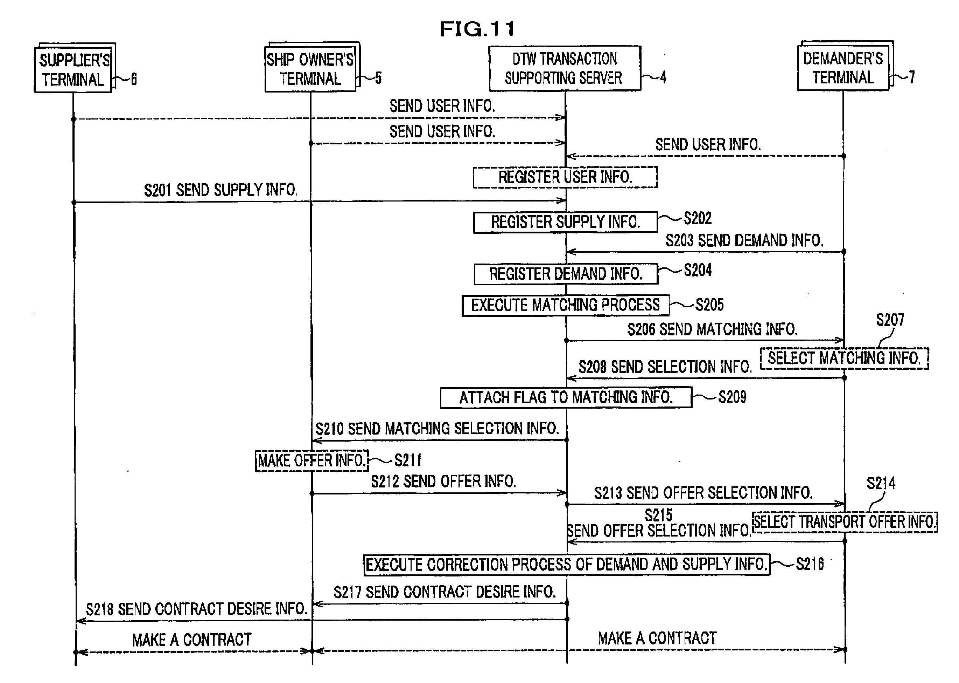

Referring to a sequence diagram shown in Fig. 11 (and Fig. 3 if necessary), a procedure of performing a transaction of domestic treated water in the present exemplary mode of implementation will be described in the following. It is noted that in Fig. 11, portions shown in broken lines show what is done by a person's action.

First, in the sequence diagram shown in Fig. 11, the procedure in which suppliers, demanders and ship owners send respective pieces of user information to the supporting server 4 for a user registration and the procedure of registering demand information to the supporting server 4 (in steps S201 through S204) are the same as the steps S101 through S104 of the first exemplary mode of implementation shown in Fig. 4 and accordingly the description thereof is omitted.

### (Matching Process)

Then, the supporting server 4 causes the matching means 402 to perform a matching process of supply information and demand information collected and registered in steps S201 through S204 (in step S205).

In the present exemplary mode of implementation, the procedure of the matching process in the supporting server 4 is almost same as that of the flowchart shown in Fig. 8. However, in the present exemplary mode of implementation, a "matching value" indicative of the matching degree of parameters in supply information and demand information to be matched is calculated in each step of the matching process. Referring to Fig. 8, the procedure of the matching process in the present exemplary mode of implementation will be described in detail.

First the matching means 402 retrieves pieces of supply information whose "water balance" is equal to or more than a predetermined value from the supply information DB 409 and pieces of demand information whose "lacked water quantity" is equal to or more than a predetermined value from the demand information DB 410 to make the retrieved or narrowed-down pieces of information the matching candidates (in step S151).

Then the matching means 402 searches the pieces of supply information narrowed down in step S151 for pieces of supply information that meet the conditions of parameters (COD, T-N, T-P) concerning the water qualities in a to-be-matched piece of the demand information registered in the demand information DB 410 (in step S152). In this case, the range is narrowed, as the matching candidates, to the pieces of supply information that have values less than the values of the parameters concerning the water qualities in the to-be-matched piece of demand information. Then, a "matching value" is determined within a range of 0-1 in response to the differences between parameters concerning the water qualities in the demand information narrowed down as the matching candidates and those concerning the water qualities in the supply information narrowed down as the matching candidates.

Next, from the pieces of supply information narrowed down in step S152, there are retrieved those that meet the "buyable day" of the to-be-matched piece of demand information (in step S153). Here, in the matching means 402, there is installed a function for calculating the number of transport days for domestic treated water from information on the "purchase site" of the to-be-matched piece of demand information and information on the "supply site" of the supply information, and matching the to-be-matched piece of demand information with pieces of supply information in which the difference between the "supply-able day" and the "buyable day" is within a predetermined number of days centering the calculated number of transport days.

Assuming that the "buyable day" is July 30 for example and the "supply-able day" is May 30 for example, then the number of transport days is calculated from the "purchase site" of the demand information and the "supply site" of the supply information; it is determined that the match is possible if the number of transport days is within a range of 31 days plus or minus one week for example; and the "matching value" is set to "1" if the number of transport days is "31" and is set to a matching value of 1 minus "0.1" for each increment or decrement of the number o transport days from 31.

Then, the pieces of supply information narrowed down in step S153 is searched comparing the "purchase price" of demand information and the "supply price" of supply information to find pieces of supply information that have "supply prices" lower than the "purchase price" by a predetermined amount of money (in step S154). Further, the "matching value" is set to "1" if, for example, the difference between the "purchase price" and the "supply price" is equal to or more than "a predetermined price + 0.1 US$/bbl", set to "0.3" if the difference between the "purchase price" and the "supply price" is equal to "the predetermined price", and set to a value ranging 0.3-1 in response to the ratio of the purchase price and the supply price if the difference is between the supply price and the supply price plus 0.1 US$/bbl.

The search result in step S154 is final matching information. The value into which the "matching values" calculated in steps S152 through S154 are multiplied by one another is added as a final "matching value" to the matching information. The matching information is registered in the matching information DB 411 by the register means 403 (in step S155).

Then, it is determined whether the matching process has exhausted the possible pieces of demand information (in step S156), and the steps S151 through S155 are repeated to output matching information till the matching is completed for all of the possible pieces of demand information.

In Table 4, there are shown some exemplary pieces of matching information registered in the matching information DB 411.

**Table 4**

| Exemplary Matching Information Registered in Matching Information DB | | | | |
|---|---|---|---|---|
| Matching List ID | Demand List ID | Supply List ID | Selection Flag | Matching Value |
| CBB001 | ZA001 | AA003 | null | 0.5 |
| CBB002 | ZA001 | AA005 | null | 0.8 |
| CBB003 | ZA005 | AA008 | null | 0.3 |
| : | : | : | : | : |

In each piece of matching information shown in Table 4, "Demand List ID" of the matched piece of demand information and "Supply List ID" of the matched piece of supply information are registered associated with "Matching List ID" uniquely assigned to the piece of matching information, and to the piece of matching information there are added a "selection flag" indicative of whether the matching information is selected or not and the "matching value" for the matching information. It should be noted that the ways of calculating the matching values in steps S152 through S204 may be changed in response to the degree of significance of respective parameters.

Next, completing the matching process of step S205, the supporting server 4 which has just registered the matching information in the matching information DB 411 sends, with the display creation means 404, the matching information in the form of a matching information presenting screen on which a list of the matching information for each demander is displayed to the demander's terminal 7 (in step S207).

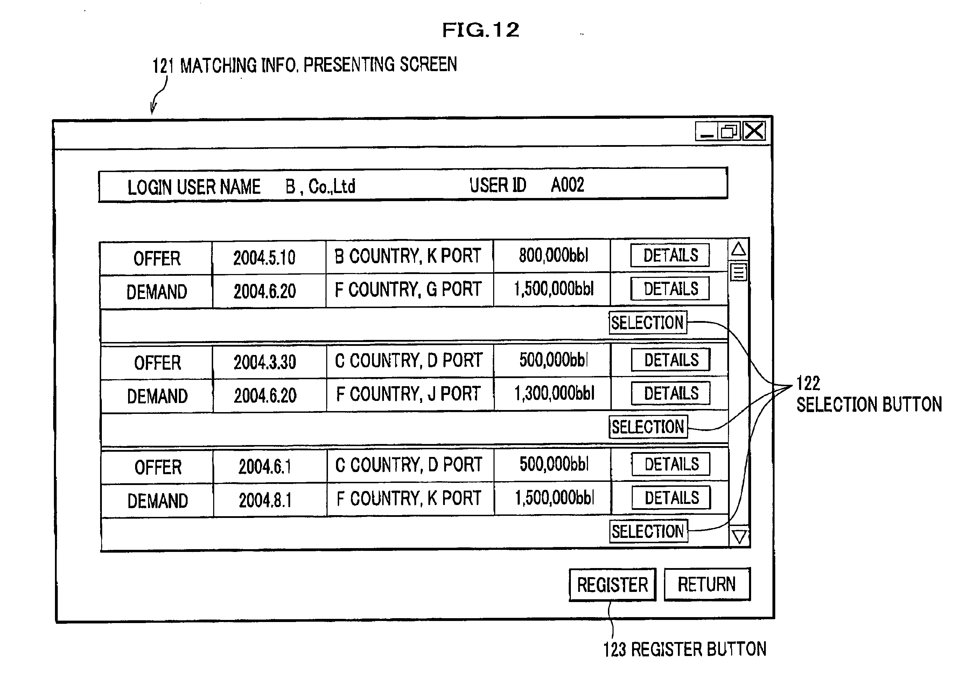

The demander's terminal 7 displays the received matching information presenting screen, and referring to the matching information presenting screen, the demander selects a piece of matching information that satisfies his or her own needs (in step S207). In Fig. 12, there is shown an example of the matching information presenting screen displayed in the demander's terminal 7. As shown in Fig. 12, the matching information presenting screen 121 displays a list of pieces of matching information for the demander, and includes, in the bottom of each piece of matching information, a selection button 122 to be clicked when the demander accepts treated water from the supplier of the matching information and a register button 123 to be click when the selection of the matching information is determined. The pieces of matching information for each demander which are displayed on the matching information presenting screen 121 may be arranged in a descending order of the matching value, and an arrangement may be also made such that pieces of matching information whose "matching value" is not more than a predetermined value are not displayed.

Then, the demander selects a desired piece of matching information and clicks the register button 123, which causes a piece of matching selection information indicative of which piece of matching information is selected to be transmitted to the supporting server 4 (in step S208).

In response to a reception of the piece of matching selection information, the supporting server 4 puts a flag to the selected piece of matching information by rewriting the "selection flag" of the selected piece from "null" to "1" (in step S209).

Then, on the basis of the "selection flag" of the matching information, the display creation means 404 sends the matching information selected by the demander on the matching information presenting screen 121 as the matching selection information to the ship owner's terminal 5 in the form of a matching information list screen on which the demand information and the supply information corresponding to the matching information are displayed in a list (in step S210). In this case, the matching information list screen which is displayed in the ship owner's terminal 5 and which is a display screen on which the demand information and the supply information corresponding to the matching information are displayed in a list is substantially the same as the matching information list screen 91 shown in Fig.9 of the first exemplary mode of implementation. However, all pieces of matching information registered in the matching information DB 411 are displayed in the matching information list screen 91 shown in the first exemplary mode of implementation, while, as for the matching information list screen 91 of the present exemplary mode of implementation, only pieces of matching information selected in advance by the demander are displayed on the matching information list screen 91.

The subsequent procedure of steps S211 through S218 is the same as that of steps S107 through S114 of the first exemplary mode of implementation and accordingly the description thereof is omitted.

According to the domestic treated water transaction supporting method of the present exemplary mode of implementation which method comprises the above-described steps, the demander can narrow down the matching information to be transmitted to the ship owner's terminal 5 in advance as compared with the domestic treated water transaction supporting method of the first exemplary mode of implementation. Narrowing down to pieces of matching information with a higher matching probability can reduce the busyness of each ship owner, who has to create the transport offer information by checking navigation schedules of his or her own tankers 3 and calculating fees.

Though preferred modes of implementation of the invention have been described so far, the present invention can be implemented by making various modifications without departing from the principles thereof.

For example, a domestic treated water transaction supporting system to which the present invention is applied may include a server that retains water quality test certificates issued by a third party or water quality inspection agency, and a water quality test certificate may be transmitted to the demander's terminal 7 to cause the water quality inspection agency to guarantee the water qualities.

Also, in the above-described exemplary modes of implementation, it is assumed that domestic treated water or treated water of domestic wastewater is used for the liquid transported as the ballast water. However, the same effect can be obtained even if a domestic treated water transaction supporting method according to the present invention is applied to transaction cycles that use cheaper river water and/or lake water.

### Industrial Applicability

According to the present invention, a match can be easily made among demanders, suppliers and ship owners in supplying domestic treated water from the supplier to the demander by using domestic treated water as the ballast water of a vessel, which makes it possible to realize the procurement of cheap freshwater as agricultural water and the delivering of cheap freshwater to vast crop lands and/or greening areas in arid or semiarid areas. This further enables an increase in the use value of conventional returning tankers.

## Claims

1. A domestic treated water transaction supporting system for making a match for a transaction of domestic treated water in transporting, as ballast water of a vessel, the domestic treated water into which domestic wastewater is treated and supplying the domestic treated water to demanders of the domestic treated water, the system comprising:
storing means for storing demand information concerning a demand of said domestic treated water, supply information concerning a supply of said domestic treated water, and matching information which indicates a result of matching of said demand information and said supply information;
matching means for making a match of each piece of said demand information with said supply information to find a matched piece of supply information that satisfies a demand of said demander and outputting a matching result as matching information;
register means for registering said demand information, said supply information and said matching information output by said matching means to said storing means;
display creation means for creating a matching information list screen on which a list of said matching information is displayed; and
communication means for receiving said demand information and said supply information through a communication line and sending said matching information list screen through said communication line.

2. The domestic treated water transaction supporting system as defined in claim 1, wherein said demand information includes information on water qualities, a demand quantity, a demand date and a purchase price of said domestic treated water demanded, and wherein said supply information includes information on water qualities, a supply quantity, a supply date and a supply price of said domestic treated water to be supplied.

3. The domestic treated water transaction supporting system as defined in claim 2, further comprising correction means for correcting said demand information and said supply information on the basis of a transport water quantity of said domestic treated water said vessel can transport, wherein:
through said communication means, there are received selection information that indicates which piece of said matching information is selected in said matching information list screen and transport offer information which includes information on said transport water quantity and a sale price obtained by adding a desired fee to said supply price; and
said display creation means creates and sends a transport offer screen on which a list of said transport offer information is displayed through said communication means, and wherein
when offer selection information that indicates which piece of said transport offer information is selected in said transport offer screen is received,
on the basis of said offer selection information, said correction means registers, in a supply information database, a result of subtracting said transport water quantity from a purchase water quantity in a piece of said demand information for which a transaction has been determined and registers, in said supply information database, a result of subtracting said transport water quantity from a supply water quantity in a piece of said supply information that is matched with said piece of said demand information for which said transaction has been determined.

4. A domestic treated water transaction supporting method of supporting a transaction of domestic treated water by using a domestic treated water transaction supporting system for making a match for the transaction in transporting, as ballast water of a vessel, domestic treated water into which domestic wastewater is treated and supplying the domestic treated water to demanders of the domestic treated water, the method comprising the steps of the domestic treated water transaction supporting system
receiving supply information which includes information on water qualities, a supply quantity and a supply date of said domestic treated water which each supplier supplies through a communication line from a supplier's terminal used by the supplier and registering said supply information in a supply information database;
receiving demand information which includes information on water qualities, a demand quantity and a demand date of said domestic treated water each demander demands through said communication line from a demander's terminal used by the demander, and registering said demand information to a demand information database;
making a match of each piece of said demand information with said supply information to find a matched piece of supply information that satisfies a condition of each parameter in said each piece of said demand information and registering a matching result as matching information to a matching information database; and
creating a matching information list screen on which a list of said matching information is displayed and sending said matching information list screen through said communication line to a ship owner's terminal used by a ship owner of each vessel.

5. A domestic treated water transaction supporting method of supporting a transaction of domestic treated water by using a domestic treated water transaction supporting system for making a match for the transaction in transporting, as ballast water of a vessel, domestic treated water into which domestic wastewater is treated and supplying the domestic treated water to demanders of the domestic treated water, the method comprising the steps of the domestic treated water transaction supporting system
receiving supply information which includes information on water qualities, a supply quantity and a supply date of said domestic treated water which each supplier supplies through a communication line from a supplier's terminal used by the supplier and registering said supply information in a supply information database;
receiving demand information which includes information on water qualities, a demand quantity and a demand date of said domestic treated water each demander demands, through said communication line from a demander's terminal used by the demander, and registering said demand information to a demand information database;
making a match of each piece of said demand information with said supply information to find a matched piece of supply information that satisfies a condition of each parameter in said each piece of said demand information and registering a matching result as matching information in a matching information database;
creating a matching information presenting screen on which said matching information is compiled for each demander and sending said matching information to said demander's terminal; and
receiving selection information that indicates which piece of said matching information is selected in said matching information presenting screen from said demander's terminal, and creating and sending a matching information list screen on which a list of selected matching information is displayed based on said selection information to a ship owner's terminal used by a ship owner of each vessel.

6. The domestic treated water transaction supporting method as defined in claim 5, wherein:
a degree of similarity is calculated in matching each parameter of said demand information and said supply information in said step of making a match; and
in creating said matching information presenting screen, pieces of said matching information are displayed in a descending order of said degree of similarity.

7. The domestic treated water transaction supporting method as defined in claim 4 or 6 wherein a piece of said information on said water qualities in said supply information and said demand information includes information on a chemical oxygen demand, a total nitrogen and a total phosphorus.

8. The domestic treated water transaction supporting method as defined in claim 7 wherein:
said supply information includes information on a supply price of said domestic treated water;
said demand information includes information on a purchase price of said domestic treated water; and
in said step of making a match, making matching candidates of pieces of said demand information and said supply information for which pieces a difference between said purchase price and said supply price is equal to or more than a predetermined value.

9. The domestic treated water transaction supporting method as defined in claim 8, further comprising:
receiving, through said communication line from said ship owner's terminal, selection information that indicates which piece of said matching information is selected in said matching information list screen and transport offer information which includes information on a transport water quantity of said domestic treated water the vessel can transport and a sale price obtained by adding a desired fee to said supply price;
creating and sending a transport offer screen on which a list of said transport offer information is compiled for each demander to a relevant demander's terminal; and
receiving, from said demander's terminals, offer selection information that indicates which piece of said transport offer information is selected in said transport offer screen,
on the basis of said offer selection information, registering, in said supply information database, a result of subtracting said transport water quantity from a purchase water quantity in a piece of said demand information for which a transaction has been determined,
registering, in said supply information database, a result of subtracting said transport water quantity from a supply water quantity in a piece of said supply information that is matched with said piece of said demand information for which a transaction has been determined, and
returning to said step of making a match.

10. A recording media on which a program is recorded to make a computer execute the domestic treated water transaction supporting method as defined in claim 9.
